# FASCICULE DE BREVET EUROPEEN

(11) **EP 0 473 483 B1**
(45) Date de publication et mention de la délivrance du brevet: **07.12.1994**
(21) Numéro de dépôt: 91402178.7
(22) Date de dépôt: 02.08.1991
(51) Int. Cl.: H02G 3/08, H01R 25/16

(54) **Boîte de montage pour appareil électrique**
Befestigungsgehäuse für elektrisches Gerät
Mounting box for electrical apparatus

(30) Priorité: 30.08.1990 FR 9010808
(43) Date de publication de la demande: 04.03.1992
(73) Titulaire: PLANET-WATTOHM, 60300 Senlis (FR)
(72) Inventeur: Coutant, Régis, F-60117 Vauciennes (FR); Laigle, Jean, F-93700 Drancy (FR)
(74) Mandataire: CABINET BONNET-THIRION

(56) Documents cités:
- EP-A- 0 289 410
- DE-U- 8 713 513
- GB-A- 2 211 364

## Description

L'invention se rapporte à une boîte de montage pour appareil électrique; elle concerne plus particulièrement un perfectionnement permettant l'insertion de ladite boîte dans une goulotte de passage de conducteurs.

La demande de brevet EP-A- 0 289 410 décrit un socle d'appareil électrique plus particulièrement conçu pour prendre place dans une goulotte de passage de conducteurs et constitué d'un ou plusieurs éléments modulaires à profil en U et de cloisons transversales d'extrémité. Ces différents éléments sont pourvus de crochets élastiques en matière plastique, permettant le montage et la fixation d'un tel socle dans une goulotte précitée, le verrouillage de chaque crochet étant assuré par une vis spécifique.

Le document DE-U- 8 713 513 décrit un autre modèle de socle d'appareil électrique selon l'art antérieur.

L'invention concerne plus particulièrement une nouvelle structure de boîte de montage destinée à recevoir au moins un appareil électrique et susceptible d'être elle-même montée dans une goulotte de passage de conducteurs.

Dans cet esprit l'invention concerne donc une boîte de montage destinée à recevoir au moins un appareil électrique et susceptible d'être montée dans une goulotte de passage de conducteurs, caractérisée en ce que chacune de ses parois latérales transversales comporte, à sa partie inférieure, un logement de verrouillage ouvert, localisé pour être positionné au montage au voisinage d'un rail de fond ou analogue d'une telle goulotte, et en ce que deux coulisseaux indépendants coopèrent respectivement avec ces logements de verrouillage, chaque coulisseau comportant des moyens d'accrochage audit rail et un tenon transversal de forme et dimensions correspondant à l'ouverture d'un tel logement de verrouillage.

L'invention sera mieux comprise et d'autres avantages de celle-ci apparaîtront plus clairement à la lumière de la description qui va suivre d'une boîte de montage conforme à son principe, donnée en référence aux dessins annexés dans lesquels:
- la figure 1 est une vue en perspective éclatée représentant une boîte de montage à entraxe variable conforme à l'invention, mise en place dans une goulotte de passage de conducteurs et dont les dimensions sont ajustées pour recevoir une platine d'appareil électrique en forme de cadre rectangulaire;
- la figure 2 est une vue schématique en coupe transversale illustrant une possibilité de montage de la boîte dans un type de goulotte; et
- la figure 3 est une vue de détail en coupe transversale, illustrant un des moyens de guidage longitudinal possibles des deux demi-boîtes.

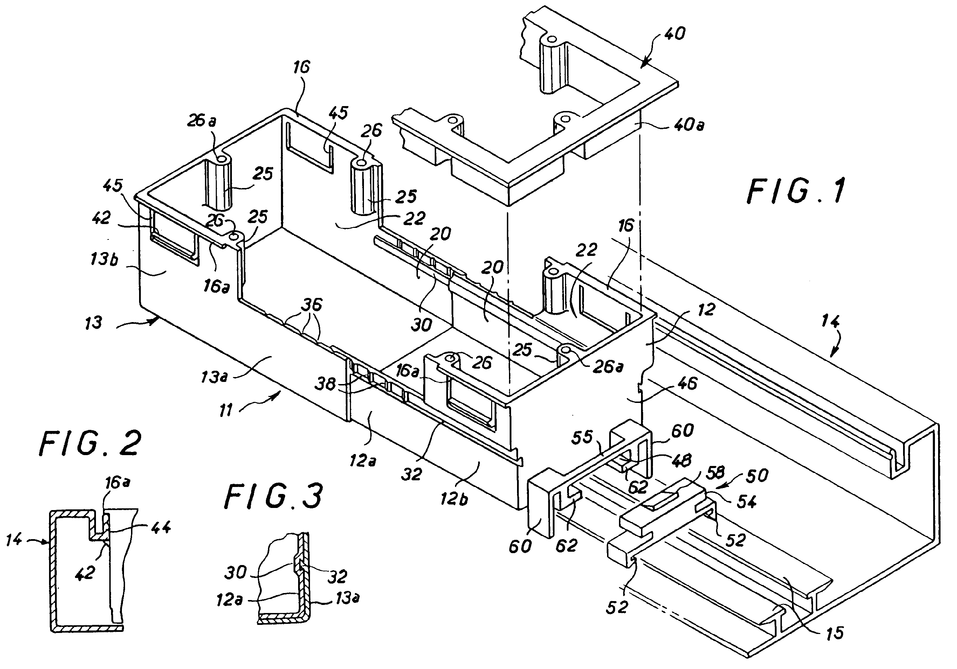

On a représenté une boîte de montage, ici à entraxe variable 11, principalement constituée par l'assemblage de deux demi-boîtes en matière plastique moulée, semblables, mais de forme et dimensions légèrement différentes, comme on le verra plus loin. On distingue donc une première demi-boîte 12 et une seconde demi-boîte 13. Une telle boîte de montage, de dimension longitudinale ajustable pour recevoir un ou plusieurs appareils électriques, est plus particulièrement destinée à être montée dans une goulotte de passage de conducteurs 14. Cette dernière a un profil globalement en forme de U et peut être munie d'un double rail de fond 15 du modèle représenté ou autre. Elle est partiellement représentée sur la figure 1. La même goulotte est partiellement représentée en coupe transversale sur la figure 2.

Chaque demi-boîte 12 et 13 comporte une portion d'assemblage 12a, 13a et une partie de montage 12b, 13b, respectivement conformée pour recevoir une platine 40 d'appareil électrique. La partie de montage 12b ou 13b comporte, à sa partie supérieure, un bord d'ouverture 16 en forme de U, muni d'une nervure externe 16a. Pour chaque demi-boîte, les parois latérales longitudinales 20 de ladite portion d'assemblage sont plus basses que les parois latérales longitudinales 22 de la partie de montage voisine. Ladite partie de montage comporte intérieurement des moyens de fixation d'une platine 40 dimensionnée pour un ou plusieurs appareils électriques précités. Ces moyens de fixation sont ici constitués par des colonnettes 25 percées longitudinalement et venues de moulage avec les différentes parois latérales longitudinales et transversale de ladite partie de montage. Les trous 26 et 26a de ces colonnettes sont taraudés ou taraudables par des vis ou munis d'inserts. Les colonnettes sont accolées aux faces internes desdites parois latérales de la partie de montage.

Dans l'exemple plus spécifiquement décrit, les dimensions transversales externes d'une portion d'assemblage 12a de la première demi-boîte 12 sont sensiblement égales aux dimensions transversales internes d'une portion d'assemblage 13a de la seconde demi-boîte 13 et cette dernière au moins présente une face latérale transversale ouverte pour permettre un assemblage télescopique longitudinal desdites demi-boîtes. Par conséquent, il apparaît bien que l'entraxe des trous 26a des colonnettes 25 portées par les parois transversales opposées des demi-boîtes est variable et ajustable, comme d'ailleurs l'entraxe des trous des autres colonnettes homologues symétriques, permettant l'adaptation de différents types d'appareils électriques.

En outre, les demi-boîtes sont pourvues de moyens coopérants de guidage longitudinal. Ces moyens de guidage sont ici constitués par des nervures 30 et glissières 32 en queue d'aronde, définies le long des parois latérales longitudinales, en contact mutuel, des deux demi-boîtes. Le guidage peut être réalisé par tout autre moyen de guidage longitudinal. Plus précisément, dans le cas représenté, les nervures 30 sont venues de moulage sur les faces internes des parois latérales longitudinales de la demi-boîte 13 tandis que les glissières 32 sont conformées dans les parois latérales longitudinales de la demi-boîte 12 et s'ouvrent sur les faces externes de ces parois. Elles s'étendent sur toute la longueur de la demi-boîte 12. La coopération de ces moyens de guidage est illustrée par la figure 3. De plus, au moins deux parois longitudinales en contact mutuel desdites demi-boîtes, sont respectivement pourvues d'une rangée d'encoches 36 et d'une rangée de dents 38 correspondantes, coopérant afin d'ajuster rapidement et de maintenir en place les deux demi-boîtes à une distance souhaitée correspondant à un entraxe d'appareil électrique choisi. Dans l'exemple représenté, la demi-boîte 12 comporte deux rangées d'encoches 38 sur les faces externes de ses parois latérales longitudinales tandis que la demi-boîte 13 comporte deux rangées d'encoches 36 correspondantes sur les faces internes de ses parois latérales longitudinales.

La partie de montage 12b de la première demi-boîte 12 est élargie transversalement à sa partie supérieure à partir d'un niveau situé au-dessus des rainures 32, de façon que son bord supérieur 16 en forme de U ait les mêmes dimensions que celles du bord supérieur de la partie de montage 13b de ladite seconde demi-boîte 13. Cette configuration particulière de la demi-boîte 12 permet d'accueillir une platine d'appareil électrique 40 de forme générale rectangulaire. Il est à noter que les termes "inférieur" ou "supérieur" employés tout au long de la description ne sauraient faire référence à une quelconque position d'utilisation de la boîte de montage. Ils indiquent simplement la position de tel ou tel élément par rapport à un autre en supposant la paroi de fond de chaque demi-boîte placée dans un plan horizontal.

Les deux demi-boîtes 12 et 13 sont pourvues de différents moyens permettant de les assujettir à une goulotte 14 ou structure analogue.

Ainsi, selon une caractéristique de l'invention et pour une fixation à une goulotte munie d'un rail de fond 15 tel que représenté à la figure 1, la paroi latérale transversale 46 de chaque demi-boîte 12, 13 comporte, à sa partie inférieure, un logement de verrouillage 48, ouvert, localisé pour être positionné après montage, au voisinage dudit rail de fond 15, plus précisément au-dessus de celui-ci. Par ailleurs, pour chaque demi-boîte, un coulisseau 50, indépendant, présente des moyens d'accrochage audit rail sous forme de deux crochets 52 en regard l'un de l'autre et conformés pour coopérer avec les bords longitudinaux extérieurs du rail double 15. Le coulisseau 50 peut ainsi facilement être assujetti audit rail. Il comporte en outre un tenon transversal 54 de forme et dimensions correspondant à l'ouverture du logement de verrouillage 48. Dans l'exemple représenté, la partie supérieure de l'ouverture du logement de verrouillage est délimitée par un simple élément flexible 55 en forme de barrette tandis que le coulisseau 50 comporte, à sa partie supérieure, une dent 58 formant rampe. L'agencement est tel que la dent 58 puisse venir s'encastrer dans le logement de verrouillage 48 après forçage de l'élément flexible 55. D'autre part, chaque demi-boîte comporte des pattes latérales 60 situées de part et d'autre du logement de verrouillage 48 et contre lesquelles viennent s'appliquer, en position de montage, les faces externes des crochets 52 dudit coulisseau. Comme cela ressort clairement de la figure 1, le logement de verrouillage 48 est conformé pour accueillir le tenon transversal 54 qui vient se loger entre l'élément flexible 55 et deux nervures 62 à profil en L, se faisant face en-dessous et de part et d'autre de l'élément flexible 54. Ces nervures viennent prendre appui sous le tenon transversal 55, au montage. Lorsque le coulisseau 50, qui vient d'être décrit, est engagé et dûment verrouillé dans le logement ouvert 48, les efforts de traction sur les appareils électriques portés par la boîte sont repris au niveau du tenon 54 et des nervures 62. Les crochets 52 sont efficacement bloqués et ne peuvent basculer vers l'extérieur, grâce à la présence des pattes latérales 60.

En outre, pour un autre mode de fixation, chaque paroi latérale longitudinale de chaque demi-boîte comporte un crochet élastique 42, allongé, susceptible de coopérer avec un rebord supérieur 44 d'une goulotte de passage de conducteurs. Ces crochets sont prévus près des bords supérieurs 16 desdites demi-boîtes et plus particulièrement en regard et à distance constante des nervures 16a. Ils sont délimités par des découpes pratiquées dans les parois des demi-boîtes, lesquelles découpes leur donnent l'élasticité voulue. Dans l'exemple décrit, une telle découpe 45 est une lumière en forme de U. Le crochet 42, en forme de nervure rectiligne dirigée vers l'extérieur, est situé près de la base du U. Le montage est celui de la figure 2 où il apparaît clairement que la distance séparant le crochet 42 du rebord 16a correspond à l'épaisseur du rebord 44 de la goulotte, normalement conformé pour la fixation du couvercle de celle-ci. La fixation de la boîte de montage, une fois réglée à la longueur voulue, se fait donc par simple emboîtement à force dans la goulotte, entraînant le verrouillage des crochets 42. De plus, il est à noter que, du fait que l'élasticité des crochets est donnée par des découpes définies dans les parois latérales mêmes, ces crochets, une fois en prise comme représenté à la figure 2, sont bloqués par la mise en place de la platine 40, avantageusement munie d'une jupe latérale d'emboîtement 40a. Après mise en place de la platine, par vissage dans les colonnettes 25, ladite jupe empêche tout retrait du crochet vers l'intérieur, ce qui rend impossible un arrachement accidentel de la boîte.

## Revendications

1. Boîte de montage destinée à recevoir au moins un appareil électrique et susceptible d'être montée dans une goulotte de passage de conducteurs (14), caractérisée en ce que chacune de ses parois latérales transversales (46) comporte, à sa partie inférieure, un logement de verrouillage ouvert (48), localisé pour être positionné au montage au voisinage d'un rail de fond (15) ou analogue d'une telle goulotte, et en ce que deux coulisseaux (50) indépendants coopèrent respectivement avec ces logements de verrouillage, chaque coulisseau comportant des moyens d'accrochage audit rail et un tenon transversal (54) de forme et dimensions correspondant à l'ouverture d'un tel logement de verrouillage.

2. Boîte de montage selon la revendication 1, caractérisée en ce qu'un côté de l'ouverture dudit logement de verrouillage est délimité par un élément flexible (55) et en ce qu'une dent formant rampe (58) est définie sur ledit coulisseau, l'agencement étant tel que ladite dent vienne se positionner dans ledit logement de verrouillage après forçage dudit élément flexible.

3. Boîte de montage selon la revendication 2, caractérisée en ce qu'elle comporte en outre des pattes latérales (60) situées de part et d'autre dudit logement de verrouillage et contre lesquelles viennent s'appliquer, en position de montage, les faces externes de crochets (52) formant lesdits moyens d'accrochage dudit coulisseau, empêchant ainsi tout recul des crochets (52) et offrant une bonne tenue à l'arrachement.

4. Boîte de montage selon l'une des revendications précédentes, caractérisée en ce qu'elle est constituée de deux demi-boîtes (12, 13) semblables, en ce que les dimensions transversales externes d'une portion d'extrémité (12a) d'une première demi-boîte (12) sont sensiblement égales aux dimensions transversales internes d'une portion d'extrémité (13a) d'une seconde demi-boîte (13), en ce que cette dernière au moins présente une face latérale transversales ouverte pour permettre un assemblage télescopique longitudinal desdites demi-boîtes et en ce que la paroi latérale transversale (46) de chaque demi-boîte comporte, près de sa base, un logement de verrouillage (48), ouvert, précité.

## Claims

1. A mounting box intended to receive at least one piece of electrical equipment and capable of being mounted in a duct for the passage of conductors (14), characterised in that each of its transverse lateral walls (46) comprises, at its lower part, an open locking recess (48) which is located so that when fitted it is positioned in the vicinity of a base rail (15), or the like, of one such duct, and in that two independent slide blocks (50) cooperate respectively with the locking recess, each slide block comprising means for hooking it to said rail and a transverse post (54) which corresponds in shape and size to the opening of one such locking recess.

2. A mounting box according to Claim 1, characterised in that one side of the opening of said locking recess is delimited by a flexible element (55) and in that a tooth forming a ramp (58) is defined on said slide block, the arrangement being such that said tooth is positioned in said locking recess after said flexible element has been forced.

3. A mounting box according to Claim 2, characterised in that it further comprises lateral limbs (60) disposed on either side of said locking recess and against which, in the fitted position, the outer faces of the hooks (52) forming said hooking means for the slide block bear, thereby preventing the hooks (52) from retracting and offering good resistance to being pulled out.

4. A mounting box according to one of the preceding claims, characterised in that it is constituted by two similar box halves (12, 13), in that the external transverse dimensions of an end portion (12a) of a first box half (12) are substantially equal to the internal transverse dimensions of an end portion (13a) of a second box half (13), in that this latter, at least, has an open transverse lateral face to permit longitudinal telescopic assembly of said box halves and in that the transverse lateral wall (46) of each box half comprises, close to its base, an afore-mentioned, open locking recess (48).

## Patentansprüche

1. Befestigungsgehäuse für mindestens ein elektrisches Gerät zum Einbau in einen Kabeldurchführungskanal (14),
dadurch **gekennzeichnet**,
daß jeder seiner seitlichen Querwände (46) im unteren Abschnitt eine offene Riegelaufnahme (48) aufweist, die derart angeordnet ist, daß sie beim Einbau in der Nähe einer Bodenschiene (15) oder einer analogen Einrichtung eines solchen Kabelkanals angeordnet werden kann, und daß zwei voneinander unabhängige Führungsblöcke (50) mit diesen Riegelaufnahmen zusammenwirken, wobei jeder Führungsblock Mittel zur Befestigung an der Schiene aufweist sowie einen Querzapfen (54), dessen Form und Abmessungen mit der Öffnung einer solchen Riegelaufnahme korrespondieren.

2. Befestigungsgehause nach Anspruch 1,
dadurch **gekennzeichnet**,
daß eine Seite der Öffnung dieser Riegelaufnahme durch ein flexibles Element (55) begrenzt wird, und daß ein eine Auflaufschräge (58) bildender Zacken auf dem Führungsblock vorgesehen ist, wobei die Betätigung derart erfolgt, daß der Zacken nach Beaufschlagung des flexiblen Elements in der Riegelaufnahme zu liegen kommt.

3. Befestigungsgehäuse nach Anspruch 2,
dadurch **gekennzeichnet**,
daß darüber hinaus seitliche Schenkel (60) vorhanden sind, die beidseits der Riegelaufnahme angeordnet sind und an denen sich in Einbaulage die AuBenseiten der Haken (52) abstützen, welche die Befestigungsmittel des Führungsblocks bilden, wodurch jedes Zurückziehen der Haken (52) verhindert und ein guter Halt gegen Herauslösen bewirkt wird.

4. Befestigungsgehause nach einem der vorhergehenden Ansprüche,
dadurch **gekennzeichnet**,
daß sie aus zwei ähnlichen Gehäusehälften (12, 13) gebildet ist, daB die äußere Quererstreckung eines Außenabschnitts (12a) einer ersten Gehäusehälfte (12) im wesentlichen gleich ist mit der inneren Quererstreckung eines äußeren Abschnitts (13a) einer zweiten Gehäusehälfte (13), daß diese letztere zumindest eine offene seitliche Querwand aufweist, um ein teleskopartiges Zusammenfugen in Längsrichtung der beiden Gehäusehälften zu ermöglichen, und daß die seitliche Querwand beider Gehäusehälften nahe ihrem Grund eine vorgenannte offene Riegelaufnahme (48) aufweist.
